(19) 

Europäisches Patentamt

European Patent Office

Office européen des brevets

(11) **EP 3 524 439 B1**

(12) **EUROPEAN PATENT SPECIFICATION**

(45) Date of publication and mention of the grant of the patent:
**24.11.2021 Bulletin 2021/47**

(21) Application number: **17858310.0**

(22) Date of filing: **29.09.2017**

(51) Int Cl.:
**B41M 5/00** *(2006.01)*　　　**B41M 7/00** *(2006.01)*
**B41J 11/00** *(2006.01)*　　　**C09D 11/101** *(2014.01)*
**C09D 11/38** *(2014.01)*　　　*C09D 11/34* *(2014.01)*

(86) International application number:
**PCT/JP2017/035489**

(87) International publication number:
**WO 2018/066472 (12.04.2018 Gazette 2018/15)**

(54) **IMAGE FORMING METHOD AND IMAGE FORMING SYSTEM**

BILDERZEUGUNGSVERFAHREN UND BILDERZEUGUNGSSYSTEM

PROCÉDÉ ET SYSTÈME DE FORMATION D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2016 JP 2016199353**

(43) Date of publication of application:
**14.08.2019 Bulletin 2019/33**

(73) Proprietor: **Konica Minolta, Inc.**
**Tokyo 100-7015 (JP)**

(72) Inventor: **TAKAKU, Yusuke**
**100-7015 Tokyo (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
WO-A1-2016/013644　　WO-A1-2016/129452
JP-A- 2010 162 894　　JP-A- 2013 215 923
JP-A- 2013 226 745　　US-A1- 2013 052 332

EP 3 524 439 B1

**Description**

Technical Field

The present invention relates to an image forming method and an image forming system.

Background Art

An inkjet method is employed in a variety of fields of printing because images can be simply and inexpensively formed by this method.

Inks used for forming images by the inkjet method are classified into several types of inks such as a water-based ink containing water and optionally a small amount of an organic solvent as a liquid component, a solvent-based ink containing an organic solvent as a liquid component but containing substantially no water, and an actinic radiation-curable ink containing, as a liquid component, a photocurable compound that is cured by polymerization and crosslinking through irradiation with actinic radiation after printing, and these inks are used in accordance with the intended use. An image forming method using the actinic radiation-curable ink has a feature that images having high adhesion can be formed regardless of water absorbability of the recording medium.

As a kind of the actinic radiation-curable ink, an ink containing a gelling agent for reversibly undergoing sol-gel phase transition in accordance with change in temperature (hereinafter sometimes simply referred to as the "gel ink") has been developed. The gel ink has a feature that wetting and spreading of the ink can be easily controlled because after the ink heated to a sol state is ejected from a nozzle of an inkjet head and lands on the surface of a recording medium, the ink is cooled to undergo gelation to be pinned thereon. When the gel ink thus pinned on the surface of the recording medium is irradiated with actinic radiation, the gel ink is cured to form an image.

In recent years, attempts have been made to apply image formation by the inkjet method to various types of recording media. For example, PTL 1 describes that an image can be formed also on a recording medium having a corrugated surface such as a corrugated cardboard by using a gel ink containing a gelling agent having an alkyl group and an amide group having about 50 carbon atoms.

On the other hand, for a recording medium having low ink absorbability, there is a known method in which surface energy of the surface of the recording medium is increased through a corona treatment, a plasma treatment or the like for making the ink having landed thereon easily wet and spread to a sufficient dot diameter.

For example, PTL 2 describes a method for forming an image, by using a gel ink, on a polyethylene terephthalate (PET) film having been subjected to a corona treatment immediately before printing. Besides, PTL 3 and PTL 4 describe an image forming apparatus for forming an image using a water-based ink including a corona treatment part or a plasma treatment part for increasing surface energy of a recording medium. PTL 5, PTL 6, PTL 8 and PTL 9 disclose image forming methods involving actinic radiation curable inkjet inks comprising a gelling agent similar to the one presently claimed. PTL 7 discloses a printing method using UV curable inks on corrugated cardboard and PTL 10 discloses a printing method including gel inks.

Citation List

Patent Literatures

PTL 1: U.S. Patent Application Publication No. 2008/0204538
PTL 2: Japanese Patent Application Laid-Open No. 2014-159114
PTL 3: Japanese Patent Application Laid-Open No. 2015-143003
PTL4: Japanese Patent Application Laid-Open No. 2015-180529
PTL 5: JP 2013 226745 A
PTL 6: JP 2013 215923
PTL 7: JP 2010 162894 A
PTL 8: WO 2016/129452 A1
PTL 9: WO 2016/013644 A1
PTL 10: US 2013/052332 A1

**EP 3 524 439 B1**

Summary of Invention

Technical Problem

PTL 1 discloses that an image can be formed on a recording medium of a corrugated cardboard or the like using a gel ink. According to the finding of the present inventor, however, when an image was formed on a recording medium of a corrugated cardboard or the like using a gel ink as described in PTL 1, the resultant image sometimes became uneven because some dots of the image were lost and hence the image could not be completely formed or gradation could not be smoothly expressed.

Such a problem is probably caused because the surface energy of the recording medium was so small that the wetting and spreading of the ink having landed thereon was insufficient. When an image was formed, using a gel ink, on a recording medium of a corrugated cardboard or the like having surface energy increased through a discharge treatment described in PTLs 2 to 4, however, a refined image was difficult to form because of excessive wetting and spreading of the ink.

The present invention was devised in consideration of the above-described problem, and an object is, in forming an image on a recording medium of a corrugated cardboard or the like by the inkjet method using a gel ink, to provide an image forming method in which a more refined image can be formed with image unevenness suppressed, and an image forming system capable of practicing the image forming method.

Solution to Problem

The present invention is to solve the problem mentioned above by the following means.

[1] An image forming method, comprising:

subjecting, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner;
heating the recording medium subjected to the discharge treatment;
ejecting a droplet of an actinic radiation-curable inkjet ink from a nozzle of an inkjet head within 60 seconds after the discharge treatment, the actinic radiation-curable inkjet ink containing a photocurable compound and a gelling agent having an alkyl group having 12 or more and 26 or less carbon atoms and to undergo sol-gel phase transition depending on temperature, and allowing the droplet to land on the outermost surface of the heated recording medium subjected to the discharge treatment; and
irradiating the droplet having landed on the outermost surface with actinic radiation.

[2] The image forming method according to [1], wherein the gelling agent is a compound selected from the group consisting of a compound represented by formula (G1) and a compound represented by formula (G2):

formula (G1): R1-CO-R2

formula (G2): R3-COO-R4

wherein R1, R2, R3 and R4 all represent a hydrocarbon group having a straight chain portion having 12 or more and 26 or less carbon atoms and optionally having a branched chain.
[3] The image forming method according to [1] or [2], wherein the heating is performed in such a manner that a temperature of the outermost surface of the liner is lower than a gelling temperature of the ink by 5°C or more and 25°C or less.
[4] The image forming method according to any one of [1] to [3], wherein the heating is performed from a side of the outermost surface of the liner of the recording medium.
[5] The image forming method according to any one of [1] to [4], wherein the heating is performed from a side of the outermost surface of the liner of the recording medium and a side of a surface opposite to the outermost surface.
[6] An image forming system, comprising:

a discharge treatment section that subjects, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner;
a heating section that heats the recording medium subjected to the discharge treatment;

an ink ejection section that ejects a droplet of an actinic radiation-curable inkjet ink from a nozzle of an inkjet head, the actinic radiation-curable inkjet ink containing a photocurable compound and a gelling agent having an alkyl group having 12 or more and 26 or less carbon atoms to undergo sol-gel phase transition depending on temperature, and allows the droplet to land on the outermost surface of the heated recording medium subjected to the discharge treatment;

an actinic radiation irradiation section that irradiates the droplet having landed on the outermost surface with actinic radiation;

a conveyance section that conveys the recording medium; and

a control section that controls a conveying speed of the recording medium by the conveyance section in such a manner that the ink ejection section ejects the droplet of the inkjet ink within 60 seconds after the discharge treatment performed by the discharge treatment section.

Advantageous Effects of Invention

According to the present invention, in forming an image on a recording medium of a corrugated cardboard or the like by the inkjet method using a gel ink, an image forming method in which a more refined image can be formed with image unevenness suppressed, and an image forming system capable of practicing the image forming method are provided.

Brief Description of Drawings

FIG. 1 is a schematic side view illustrating a corona treatment apparatus usable in one embodiment of the present invention.

FIG. 2 is a schematic side view illustrating a system for forming an image by an inkjet method usable in one embodiment of the present invention.

FIG. 3 is a schematic side view illustrating another system for forming an image by the inkjet method usable in one embodiment of the present invention.

Description of Embodiments

According to earnest studies made by the present inventor, image unevenness can be further suppressed and a more refined image can be formed by an image forming method including: subjecting, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner; heating the recording medium subjected to the discharge treatment; ejecting a droplet of an actinic radiation-curable inkjet ink from a nozzle of an inkjet head within 60 seconds after the discharge treatment, the actinic radiation-curable inkjet ink containing a photocurable compound and a gelling agent having an alkyl group having 12 or more and 26 or less carbon atoms to undergo sol-gel phase transition depending on temperature, and allowing the droplet to land on the outermost surface of the heated recording medium subjected to the discharge treatment; and irradiating the droplet having landed on the outermost surface with actinic radiation.

According to the examination made by the present inventor, the water-based inks described in PTL 3 and PTL 4 have higher polarity than an actinic radiation-curable ink and are difficult to cause wetting and spreading on a recording medium. Besides, the films described in PTL 3 and PTL 4 have lower wettability than a corrugated cardboard and are difficult to cause wetting and spreading of an ink. When the wetting and spreading of an ink is difficult to cause, a gap having no ink adhesion (dot missing) may be caused between dots. Besides, since a large number of irregularities are formed owing to a corrugating medium on a surface of a corrugated cardboard, there are, along the irregularities of the surface, a region where an ink easily flows and a region where the ink is difficult to flow. Therefore, in forming an image on a corrugated cardboard, if the wetting and spreading of an ink is difficult to cause, a difference in pigment density due to the flow of the ink is easily formed in an image. Accordingly, in order to make unevenness difficult to cause in an image by the method described in PTL 3 or PTL 4, it is necessary to further increase the surface energy of the recording medium.

When the surface energy is increased in the same manner as in PTL 3 and PTL 4 in forming an image on a corrugated cardboard having higher ink wettability than a film by using an actinic radiation-curable ink having lower polarity, however, the wetting and spreading of the ink is unavoidably excessively caused. When the wetting and spreading of an ink is excessively caused, the resolution of a resultant image is lowered, and hence a refined image is difficult to form. Therefore, in forming an image on a corrugated cardboard by using an actinic radiation-curable ink, the increase of the surface energy of the recording medium needs to be set lower than that described in PTL 3 and PTL 4.

It is, however, difficult to increase the surface energy of a recording medium having a hollow structure like a corrugated cardboard even through a corona treatment or the like, and hence, it is more difficult to adjust the extent of the corona treatment or the like for obtaining surface energy suitable for the actinic radiation-curable ink not containing a gelling agent. Besides, when the increase of the surface energy is smaller, the surface energy increased by the corona treatment or the like is lost faster, and therefore, the degree of freedom in apparatus structure is decreased, and an image forming rate is more difficult to adjust.

On the contrary, when an appropriate type of gel ink is used, even if the surface energy is increased to easily cause the wetting and spreading of the ink, the ink is pinned when appropriately wet and spread, and thus excessive wetting and spreading of the ink is suppressed, and hence the dosage of the corona treatment or the like can be more freely set. Besides, when the gel ink is used, even if there is a difference in easiness in causing the wetting and spreading of the ink due to irregularities on a surface, since the excessive wetting and spreading can be suppressed by pinning, unevenness derived from irregularities owing to a corrugating medium can be difficult to occur.

When a recording medium is warmed for adjusting a time up to pinning by a gelling agent, the surface energy increased by a corona treatment or the like is easily lowered as time passes. Therefore, when an image is formed on a recording medium of a corrugated cardboard or the like using a gel ink, it is necessary to perform adjustment so that the surface energy can be sufficiently increased also when the gel ink lands thereon.

On the contrary, when the surface energy of a recording medium of a corrugated cardboard or the like is appropriately increased by a corona treatment or the like and an image is formed by ejecting the gel ink onto the recording medium within 60 seconds after the corona treatment or the like, the wetting and spreading of the ink can be sufficiently controlled. When the surface energy is appropriately increased and an image is formed with the surface energy increased in this manner, it is presumed that the wetting and spreading of the ink is sufficiently caused so as to form an image with less unevenness. On the other hand, since a rate of causing gelation of the ink by a gelling agent can be adjusted by heating the recording medium, the excessive wetting and spreading of the ink is also probably difficult to occur.

As described so far, when the dosage of the discharge treatment, the type of the gelling agent, whether or not a recording medium is heated, and a treatment time up to curing of the ink by irradiation with actinic radiation after the discharge treatment are all controlled in an appropriate combination, it is presumed that the unevenness of an image is more difficult to occur and a more refined image can be formed.

1. Image Forming Method

One embodiment of the present invention relates to a method for forming an image on a corrugated cardboard using a gel ink. The method includes, in the following order:

(1) subjecting, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner (hereinafter sometimes simply referred to as the "discharge treatment step");
(2) heating the recording medium subjected to the discharge treatment (hereinafter sometimes simply referred to as the "heating step");
(3) ejecting a droplet of a gel ink from a nozzle of an inkjet head, the gel ink containing a gelling agent having an alkyl group having 12 or more and 26 or less carbon atoms, and allowing the droplet to land on the outermost surface of the heated recording medium subjected to the discharge treatment (hereinafter sometimes simply referred to as the "landing step"); and
(4) irradiating the droplet having landed on the outermost surface with actinic radiation (hereinafter sometimes simply referred to as the "actinic radiation irradiating step").

Here, the landing step is performed within 60 seconds after the discharge treatment step.

1-1. Discharge Treatment Step

In the discharge treatment step, the outermost surface on which an image is to be formed of the liner of the recording medium corresponding to a corrugated cardboard including a corrugating medium and the liner is subjected to the discharge treatment with a dosage of 10 W·min/m$^2$ or more and 200 W·min/m$^2$ or less.

1-1-1. Recording Medium

The recording medium is a corrugated cardboard. The corrugated cardboard is a laminate including a corrugating medium formed by molding a cardboard or the like into a corrugated shape, and a liner forming an outermost surface. The corrugated cardboard may be a double-sided corrugated cardboard including liners sandwiching both surfaces of a corrugating medium or a single-sided corrugated cardboard including a liner provided only on one surface of a corrugating medium. Alternatively, the corrugated cardboard may be a reinforced corrugated cardboard, such as a double wall corrugated cardboard including double corrugating media or a triple wall corrugated cardboard including triple corrugating media, as long as it is applicable to an apparatus or a system for forming an image by the inkjet method (hereinafter sometimes simply referred to as the "image forming apparatus" or the "image forming system", respectively).

Materials of the corrugating medium and the liner are not especially limited, and are preferably paper, and may be any of known materials including a cardboard including lamination of recycled paper and kraft pulp. The corrugating medium may be, for example, a cardboard including multiple layers of recycled paper molded into a corrugated shape, such as an ordinary corrugating medium and a reinforced corrugating medium. Besides, the liner may be made from a kraft liner (K liner), a jute liner (C liner) or the like.

The corrugated cardboard may have a thickness applicable to the image forming system. From the viewpoint of handleability, micro flute including E flute, F flute and G flute is preferred.

In the corrugated cardboard, an image is formed on the outermost surface of the liner (the surface thereof not facing the corrugating medium).

1-1-2. Discharge Treatment

The discharge treatment is performed on the outermost surface on which an image is to be formed of the liner.

The discharge treatment may be performed by a known method. For example, while the corrugated cardboard is being conveyed on a dielectric roll having a surface made of an insulating dielectric, discharge may be caused from an electrode toward the dielectric roll. The electrode can be a metal electrode, a ceramic electrode or the like. The dielectric can be made of silicon, ceramic, stainless steel or the like.

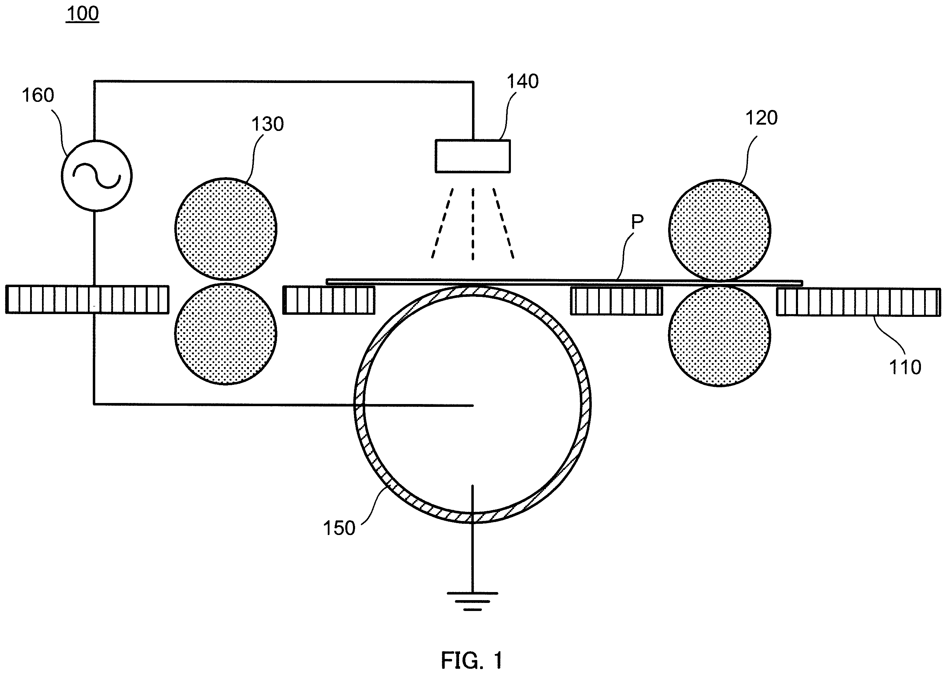

The discharge treatment can be performed by, for example, corona treatment apparatus 100 having a structure in which recording medium P (corrugated cardboard) having been conveyed on stage 110 is conveyed on dielectric roll 150 provided to oppose electrode 140 between feeding roller 120 and receiving roller 130 as illustrated in FIG. 1. At this point, a voltage is applied by AC power supply 160 between electrode 140 and dielectric roll 150 to cause discharge, and recording medium P corresponding to the corrugated cardboard is conveyed on the dielectric roll with the outermost surface of the liner disposed to face the electrode, and thus, the outermost surface of the liner is subjected to the discharge treatment.

The dosage obtained at this point is calculated in accordance with the following expression:

[Expression 1]

$$\text{Dosage} = \frac{P}{L \times V}$$

In the expression,

L is a length (m) of a discharge electrode,
V is a conveying speed (m/min) of the recording medium, and
P is discharge power (W).

The length of the discharge electrode, the conveying speed and the discharge power are adjusted so that the dosage can be 10 W·min/m² or more and 200 W·min/m² or less. Among these parameters, the discharge power that can be easily changed is preferably changed to adjust the dosage to fall in the above-described range. When the dosage is 10 W·min/m² or more, the surface energy of the outermost surface is so sufficiently increased that the wetting and spreading of the gel ink can be easily caused. When the dosage is 200 W·min/m² or less, the surface energy of the outermost surface is not excessively increased and hence excessive wetting and spreading of the ink can be suppressed. From these points of view, the dosage is preferably 25 W·min/m² or more and 100 W·min/m² or less, and more preferably 25 W·min/m² or more and 75 W·min/m² or less.

The conveying speed of the recording medium is not especially limited, and can be adjusted within a range of, for example, 1 m/min or more and 250 m/min or less, and is preferably 30 m/min or more and 200 m/min or less, more preferably 30 m/min or more and 120 m/min or less, and further preferably 55 m/min or more and 120 m/min or less.

1-2. Heating Step

In the heating step, the recording medium subjected to the discharge treatment is heated.

The surface temperature of the outermost surface can be adjusted by heating the recording medium. When the gel ink lands, in the subsequent step, on the outermost surface whose temperature has been adjusted, the ink having landed undergoes gelation after being appropriately wet and spread, and therefore, unevenness of image quality and occurrence of uneven gloss can be suppressed. On the contrary, when the gel ink is caused to land without heating the recording medium, the ink having landed is cooled by the recording medium before wetting and spreading, and hence immediately undergoes gelation to be pinned, and therefore, the unevenness of image quality is easily caused, and in addition, the surface of the ink having landed is not sufficiently smoothed (leveled) and hence uneven gloss is easily caused.

From these points of view, the heating is performed in such a manner that the surface temperature of the outermost surface is lower than the gelling temperature of the gel ink by preferably 5°C or more and 25°C or less, and more preferably 5°C or more and 20°C or less. Besides, from the viewpoint of suppressing degradation of the recording medium otherwise caused through excessive heating, the heating is preferably performed in such a manner that the surface temperature of the outermost surface is 30°C or more and 50°C or less.

For the heating, the recording medium can be heated, for example, through contact heating using a rubber heater, a warmed roller or the like, or through non-contact heating using infrared irradiation (IR irradiation), hot air blowing or the like.

The heating may be performed from the side of the outermost surface of the recording medium, or may be performed from a side of a surface opposite to the outermost surface (rear surface). Since the corrugated cardboard has a large thickness and includes, in the corrugating medium portion, air difficult to conduct heat, however, if the heating is performed merely from the rear surface side, a necessary amount of heat may be large in some cases, and in addition, unevenness may be caused on the outermost surface after the heating. Therefore, from the viewpoint of improving heating efficiency and stably performing the heating, the heating is preferably performed at least from the side of the outermost surface of the recording medium, and the heating is more preferably performed from the side of the outermost surface in combination with heating from the rear surface side.

From the viewpoint of adjusting the surface temperature of the outermost surface stably to 30°C or more and 50°C or less, when a contact heating method is employed, the temperature of a portion of a rubber heater, a roller or the like to be in contact with the outermost surface is preferably set to 50°C or more and 120 or less, and when the hot air blowing is employed, the temperature of blown air is preferably set to 70°C or more and 150°C or less.

1-3. Landing Step

In the landing step, a droplet of the gel ink is ejected from a nozzle of an inkjet head to cause the droplet to land on the outermost surface of the heated recording medium subjected to the discharge treatment.

In order that the gel ink is caused to land with the surface energy increased through the discharge treatment to cause sufficient wetting and spreading of the gel ink having landed, the structure of an apparatus or the conveying speed of the recording medium is preferably adjusted so that the droplet of the gel ink can be ejected in the landing step within 60 seconds after the discharge treatment step.

1-3-1. Inkjet Head

The inkjet head may be either of an on-demand inkjet head and a continuous inkjet head. Examples of the on-demand inkjet head include those employing an electro-mechanical conversion method of single cavity type, double cavity type, bender type, piston type, share-mode type and shared wall type, and those employing an electrothermal conversion method of thermal inkjet type and bubble jet (bubble jet being a registered trademark of Canon Inc.) type.

Besides, the inkjet head may be a scan type inkjet head having a width in a direction perpendicular to the conveyance direction of recording medium P smaller than the recording medium, or a line type inkjet head having a width in the direction perpendicular to the conveyance direction of the recording medium larger than the recording medium.

1-3-2. Gel Ink

The gel ink is an actinic radiation-curable inkjet ink containing a photocurable compound, and a gelling agent having an alkyl group having 12 or more and 26 or less carbon atoms.

1-3-2-1. Photocurable Compound

The photocurable compound can be any compound that is polymerized or crosslinked through a polymerization or crosslinking reaction caused through irradiation with actinic radiation to have a function to cure the ink. Examples of the photocurable compound include a radical polymerizable compound and a cationic polymerizable compound. The photocurable compound may be any of a monomer, a polymerizable oligomer, a prepolymer or a mixture of any of these. Merely one, or two or more photocurable compounds may be contained in the inkjet ink.

A content of the photocurable compound can be, for example, 1mass% or more and 97mass% or less with respect to a total mass of the inkjet ink.

The radical polymerizable compound is preferably an unsaturated carboxylic acid ester compound, and is more preferably (meth)acrylate. Merely one, or two or more radical polymerizable compounds may be contained in the inkjet ink. In the present invention, "(meth)acrylate" means acrylate or methacrylate, a "(meth)acryloyl group" means an acryloyl group or a methacryloyl group, and "(meth)acryl" means acryl or methacryl.

Examples of (meth)acrylate include monofunctional (meth)acrylates such as isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethyl hexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethyl succinic acid, 2-(meth)acryloyloxyethyl phthalic acid, 2-(meth)acryloyloxyethyl-2-hydroxyethyl-phthalic acid, and t-butylcyclohexyl (meth)acrylate, bifunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, PO adduct di(meth)acrylate of bisphenol A, hydroxypivalic acid neopentyl glycol di(meth)acrylate, polytetramethylene glycol di(meth)acrylate, polyethylene glycol diacrylate, tripropylene glycol diacrylate and tricyclodecanedimethanol diacrylate, and tri- or higher functional acrylates such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerinpropoxy tri(meth)acrylate, and pentaerythritol ethoxy tetra(meth)acrylate.

The (meth)acrylate may be a modified product. Examples of the modified product of the (meth)acrylate include ethylene oxide-modified (meth)acrylates such as triethylene ethylene glycol diacrylate, polyethylene glycol diacrylate, ethylene oxide-modified trimethylolpropane tri(meth)acrylate and ethylene oxide-modified pentaerythritol tetraacrylate, ethylene oxide-modified (meth)acrylates such as tripropylene ethylene glycol diacrylate, polypropylene glycol diacrylate, propylene oxide-modified trimethylolpropane tri(meth)acrylate and propylene oxide-modified pentaerythritol tetraacrylate, caprolactone-modified (meth)acrylates such as caprolactone-modified trimethylolpropane tri(meth)acrylate, and caprolactam-modified (meth)acrylates such as caprolactam-modified dipentaerythritol hexa(meth)acrylate.

The (meth)acrylate may be a polymerizable oligomer. Examples of the polymerizable oligomer of the (meth)acrylate include an epoxy (meth)acrylate oligomer, an aliphatic urethane (meth)acrylate oligomer, an aromatic urethane (meth)acrylate oligomer, a polyester (meth)acrylate oligomer and a straight chain (meth)acrylic oligomer.

The cationic polymerizable compound can be an epoxy compound, a vinyl ether compound, an oxetane compound or the like. Merely one, or two or more cationic polymerizable compounds may be contained in the inkjet ink.

Examples of the vinyl ether compound include monofunctional vinyl ether compounds such as butyl vinyl ether, butyl propenyl ether, butyl butenyl ether, hexyl vinyl ether, ethylhexyl vinyl ether, phenyl vinyl ether, benzyl vinyl ether, ethyl ethoxy vinyl ether, acetyl ethoxyethoxy vinyl ether, cyclohexyl vinyl ether and adamantyl vinyl ether, bifunctional vinyl ether compounds such as ethylene glycol divinyl ether, diethylene glycol divinyl ether, triethylene glycol divinyl ether, propylene glycol divinyl ether, dipropylene glycol vinyl ether, butylene divinyl ether, dibutylene glycol divinyl ether, neopentyl glycol divinyl ether, cyclohexanediol divinyl ether, cyclohexanedimethanol divinyl ether, norbornyldimethanol divinyl ether, isovinyl divinyl ether, divinyl resorcin and divinyl hydroquinone, and tri- or higher functional vinyl ether compounds such as glycerin trivinyl ether, glycerin ethylene oxide-adduct trivinyl ether (the number of moles of ethylene oxide added: 6), trimethylolpropane trivinyl ether, trivinyl ether ethylene oxide-adduct trivinyl ether (the number of moles of ethylene oxide added: 3), pentaerythritol trivinyl ether, ditrimethylolpropane hexavinyl ether, and oxyethylene adducts of these.

Examples of the epoxy compound include monofunctional epoxy compounds such as allyl glycidyl ether, 2-ethylhexyl glycidyl ether, phenol (polyethyleneoxy)5-glycidyl ether, butylphenyl glycidyl ether, hexahydrophthalic acid glycidyl ester, lauryl glycidyl ether, 1,2-epoxycyclohexane, 1,4-epoxycyclohexane, 1,2-epoxy-4-vinylcyclohexane and norbornene oxide, bifunctional epoxy compounds such as neopentyl glycol diglycidyl ether and l,6-hexanediol diglycidyl ether, and tri- or higher functional epoxy compounds such as polyglycerol triglycidyl ether, sorbitol polyglycidyl ether and pentaerythritol polyglycidyl ether.

Examples of the oxetane compound include monofunctional oxetane compounds such as 2-(3-oxetaiiyl)-l-butanol, 3-(2-(2-ethylhexyloxyethyl))-3-ethyloxetane and 3-(2-phenoxyethyl)-3-ethyloxetane, and polyfunctional oxetane compounds such as xylylene bisoxetane and 3,3'-(oxybismethylene)bis(3-ethyloxetane).

1-3-2-2. Gelling Agent

The gelling agent is a compound capable of solating the heated ink and causing a droplet of the ink cooled through landing on the recording medium to undergo gelation for pinning, and is a compound having an alkyl group having 12 or more and 26 or less carbon atoms. Since the wetting and spreading of the ink is accelerated because of the surface energy increased through the discharge treatment and the excessive wetting and spreading of the ink through the gelation of the ink caused by the gelling agent is suppressed, the extent of the wetting and spreading of the ink is adjusted to be adequate so that occurrence of unevenness in a resultant image can be suppressed. Besides, when the ink is in a gel state, ambient oxygen is inhibited from entering the ink droplet and hence curing inhibition by oxygen is difficult to occur, and therefore, a refined image can be more rapidly formed. Merely one, or two or more gelling agents may be contained in the inkjet ink.

When the number of carbon atoms is 12 or more, the property for pinning the ink is sufficiently increased, and therefore, when appropriately combined with the dosage and the treatment time of the discharge treatment, a refined image can be easily formed with occurrence of unevenness suppressed. When the number of carbon atoms is 26 or less, a solation temperature of the ink is not excessively increased, and hence there is no need to excessively heat the ink in ejecting the ink.

A content of the gelling agent is preferably 1.0mass% or more and 10.0mass% or less with respect to the total mass of the ink. When the content of the gelling agent is 1.0mass% or more, the property for pinning the ink is sufficiently increased, and owing to interaction with the above-described discharge treatment, a refined image can be more easily formed. When the content of the gelling agent is 10.0mass% or less, the gelling agent is difficult to precipitate on the surface of an image thus formed, and the gloss of the image can be further approximated to the gloss of an image formed using another ink, and in addition, the property for ejecting the ink from the inkjet head can be further increased. From these points of view, the content of the gelling agent in the inkjet ink is preferably 1.0mass% or more and 5.0mass% or less, more preferably 1.2mass% or more and 5.0mass% or less, and further preferably 1.5mass% or more and 3.0mass% or less.

The gelling agent preferably crystallizes in the ink at a temperature equal to or lower than a gelling temperature of the ink to form a structure in which the photocurable compound is enclosed in a three-dimensional space formed by the gelling agent having crystallized in a plate shape (which structure will be hereinafter referred to as the "card house structure").

When the card house structure is formed, the photocurable compound in a liquid form is held within the space, and hence, the wetting and spreading of the ink droplet is more difficult to be caused, which further increases the property for pinning the ink.

The gelling temperature refers to a temperature at which the ink undergoes sol-to-gel phase transition to abruptly change the viscosity of the ink when the ink having been solated or liquefied by heating is cooled. Specifically, a solated or liquefied ink is cooled with the viscosity measured with a rheometer (such as Physica MCR series, manufactured by Anton Paar Gmbh), and a temperature at which the viscosity is abruptly increased can be defined as the gelling temperature of the ink.

From the viewpoint of further facilitating formation of the card house structure, the photocurable compound and the gelling agent dissolved in the ink are preferably compatible each other.

Examples of the gelling agent suitably used for forming the card house structure through the crystallization include ketone wax, ester wax, higher fatty acid, higher alcohol, and fatty acid amide such as N-substituted fatty acid amide and special fatty acid amide.

Examples of the ketone wax include dilignoceryl ketone, dibehenyl ketone, distearyl ketone, dieicosyl ketone, dipalmityl ketone, dimyristyl ketone, myristyl palmityl ketone and palmityl stearyl ketone.

Examples of the ester wax include behenyl behenate, icosyl icosanoate, stearyl stearate, palmityl stearate, cetyl palmitate, myristyl myristate, cetyl myristate, stearyl stearate, oleyl palmitate, and glycerin fatty acid ester.

Examples of a commercially available product of the ester wax include EMALEX series, manufactured by Nihon Emulsion Co., Ltd. ("EMALEX" being their registered trademark), and RIKEMAL series and POEM series, manufactured by Riken Vitamin Co., Ltd. ("RIKEMAL" and "POEM" both being their registered trademarks).

Examples of the higher fatty acid include behenic acid, arachidic acid, stearic acid, palmitic acid, myristic acid, oleic acid, and erucic acid.

Examples of the higher alcohol include stearyl alcohol and behenyl alcohol.

Examples of the fatty acid amide include stearic acid amide, behenic acid amide, oleic acid amide, erucic acid amide, lauric acid amide, ricinoleic acid amide and 12-hydroxystearic acid amide.

Examples of a commercially available product of the fatty acid amide include NIKKAMIDE series, manufactured by Nippon Kasei Chemical Co., Ltd. ("NIKKAMIDE" being their registered trademark), ITOWAX series, manufactured by Itoh Oil Chemicals Co., Ltd., and FATTYAMID series, manufactured by Kao Corporation.

Examples of the N-substituted fatty acid amide include N-stearyl stearic acid amide and N-oleyl palmitic acid amide.

Examples of the special fatty acid amide include N,N'-ethylenebis stearyl amide, N,N'-ethylenebis-12-hydroxy stearyl amide and N,N'-xylylenebis stearyl amide.

Besides, from the viewpoint that a refined image can be easily formed even when the property for pinning the ink is further increased by further increasing the crystallinity of the gelling agent and the wetting and spreading of the ink is facilitated by increasing the dosage, the gelling agent is further preferably a ketone wax represented by the following formula (G1) and an ester wax represented by the following formula (G2). The inkjet ink may contain merely one, or two or more ketone waxes represented by the following formula (G1) and merely one, or two or more ester waxes represented by the following formula (G2). Besides, the inkjet ink may contain either one of the ketone wax represented by the following formula (G1) and the ester wax represented by the following formula (G2), and preferably contains both of these from the viewpoint of further increasing the crystallinity of the gelling agent.

Formula (G1):        R1-CO-R2

In formula (G1), R1 and R2 are both a hydrocarbon group having a straight chain portion having 12 or more and 26 or less carbon atoms and optionally having a branched chain.

Formula (G2):        R3-COO-R4

In formula (G2), R3 and R4 are both a hydrocarbon group having a straight chain portion having 12 or more and 26 or less carbon atoms and optionally having a branched chain.

In the ketone wax represented by formula (G1) and the ester wax represented by formula (G2), the hydrocarbon group has 12 or more carbon atoms, and therefore, the crystallinity of the gelling agent is further increased, and in addition, a more sufficient space is formed owing to the card house structure. Therefore, the photocurable compound can be easily sufficiently enclosed in the space, and the property for pinning the ink is further increased. Besides, since the linear or branched hydrocarbon group has 26 or less carbon atoms, the solation temperature of the ink is not excessively increased, and hence there is no need to excessively heat the ink in ejecting the ink.

Besides, from the viewpoint that the ink is caused to undergo gelation more rapidly after landing by increasing the gelling temperature of the ink, it is preferable that either of R1 and R2, or either of R3 and R4 be a saturated hydrocarbon group having 12 or more and 26 or less carbon atoms. From this point of view, it is more preferable that both of R1 and R2, or both of R3 and R4 be saturated hydrocarbon groups having 12 or more and 26 or less carbon atoms.

Examples of the ketone wax represented by formula (G1) include dilignoceryl ketone (numbers of carbon atoms: 23-24), dibehenyl ketone (numbers of carbon atoms: 21-22), distearyl ketone (numbers of carbon atoms: 17-18), dieicosyl ketone (numbers of carbon atoms: 19-20), dipalmityl ketone (numbers of carbon atoms: 15-16), dimyristyl ketone (numbers of carbon atoms: 13-14), myristyl palmityl ketone (13-16), myristyl stearyl ketone (13-18), myristyl behenyl ketone (13-22), palmityl stearyl ketone (15-18), palmityl behenyl ketone (15-22) and stearyl behenyl ketone (17-22). It is noted that numbers of carbon atoms shown in the parentheses correspond to the numbers of carbon atoms of two hydrocarbon groups separated by a carbonyl group.

Examples of a commercially available product of the ketone wax represented by formula (G1) include 18-Pentatriacontanon, manufactured by AlfaAesar, Hentriacontan-16-on, manufactured by AlfaAesar, and Kao Wax TI, manufactured by Kao Corporation ("Kao Wax" being their registered trademark).

Examples of the fatty acid or ester wax represented by formula (G2) include behenyl behenate (numbers of carbon atoms: 21-22), icosyl icosanoate (numbers of carbon atoms: 19-20), stearyl stearate (numbers of carbon atoms 17-18), palmityl stearate (numbers of carbon atoms: 17-16), lauryl stearate (numbers of carbon atoms: 17-12), cetyl palmitate (numbers of carbon atoms: 15-16), stearyl palmitate (numbers of carbon atoms: 15-18), myristyl myristate (numbers of carbon atoms: 13-14), cetyl myristate (numbers of carbon atoms: 13-16), octyldodecyl myristate (numbers of carbon atoms: 13-20), stearyl oleate (numbers of carbon atoms: 17-18), stearyl erucate (numbers of carbon atoms: 21-18), stearyl linoleate (numbers of carbon atoms: 17-18), behenyl oleate (numbers of carbon atoms: 18-22) and arachidyl linoleate (numbers of carbon atoms: 17-20). It is noted that numbers of carbon atoms shown in the parentheses correspond to the numbers of carbon atoms of two hydrocarbon groups separated by an ester group respectively.

Examples of a commercially available product of the ester wax represented by formula (G2) include UNISTAR M-2222SL and SPERMACETI, manufactured by NOF Corporation ("UNISTAR" being their registered trademark), EXCEPARL SS and EXCEPARL MY-M, manufactured by Kao Corporation ("EXCEPARL" being their registered trademark), EMALEX CC-18 and EMALEX CC-10, manufactured by Nihon Emulsion Co., Ltd., and AMREPS PC, manufactured by Kokyu Alcohol Kogyo Co., Ltd. ("AMREPS" being their registered trademark). Many of these commercially available products are mixtures of two or more components, and hence may be contained in the ink after separation/purification if necessary.

1-3-2-3. Additional Components

The gel ink may further contain, in addition to the above-described components, additional components such as a photopolymerization initiator, a colorant, a UV absorber, a dispersant, a photosensitizer, a polymerization inhibitor and a surfactant as long as the wettability on a recording medium is not conspicuously changed. Merely one, or two or more of these components may be contained in a specific gel ink.

1-3-2-3-1. Photopolymerization Initiator

When the photocurable compound is a compound having a radical polymerizable functional group, the photopolymerization initiator contains a photo-radical initiator, and when the photocurable compound is a compound having a cationic polymerizable functional group, the photopolymerization initiator contains a photoacid generator. Merely one, or two or more photopolymerization initiators may be contained in the ink of the present invention. The photopolymerization initiator may be a combination of both a photo-radical initiator and a photoacid generator.

The photo-radical initiator includes a cleavage type radical initiator and a hydrogen abstraction type radical initiator.

Examples of the cleavage type radical initiator include an acetophenone-based initiator, a benzoin-based initiator, an acylphosphine oxide-based initiator, benzyl and methylphenyl glyoxyester.

Examples of the hydrogen abstraction type radical initiator include a benzophenone-based initiator, a thioxanthone-based initiator, an aminobenzophenone-based initiator, 10-butyl-2-chloroacridone, 2-ethyl anthraquinone, 9,10-phenanthrenequinone and camphorquinone.

Examples of the photoacid generator include triaryl sulfonium hexafluorophosphate salt, iodonium (4-methylphenyl)(4-(2-methylpropyl)phenyl)hexafluorophosphate, triaryl sulfonium hexafluoroantimonate, and 3-methyl-2-butenyltetramethylenesulfonium hexafluoroantimonate.

A content of the photopolymerization initiator may fall in a range for sufficiently curing the ink, and can be, for example, 0.01 mass% or more and 10mass% or less with respect to the total mass of the ink of the present invention.

1-3-2-3-2. Colorant

The colorant includes a dye and a pigment.

From the viewpoint of obtaining an image having good weather resistance, the colorant is preferably a pigment. The pigment can be selected, in accordance with a color of an image to be formed, or the like, for example, from a yellow pigment, a red or magenta pigment, a blue or cyan pigment and a black pigment.

Examples of the yellow pigment include C.I. Pigment Yellow (hereinafter sometimes simply referred to as "PY") 1, PY3, PY12, PY13, PY14, PY17, PY34, PY35, PY37, PY55, PY74, PY81, PY83, PY93, PY94, PY95, PY97, PY108, PY109, PY110, PY137, PY138, PY139, PY153, PY154, PY155, PY157, PY166, PY167, PY168, PY180, PY185 and PY193.

Examples of the red or magenta pigment include C.I. Pigment Red (hereinafter sometimes simply referred to as "PR") 3, PR5, PR19, PR22, PR31, PR38, PR43, PR48:1, PR48:2, PR48:3, PR48:4, PR48:5, PR49:1, PR53:1, PR57:1, PR57:2, PR58:4, PR63:1, PR81, PR81:1, PR81:2, PR81:3, PR81:4, PR88, PR104, PR108, PR112, PR122, PR123, PR144, PR146, PR149, PR166, PR168, PR169, PR170, PR177, PR178, PR179, PR184, PR185, PR208, PR216, PR226, and PR257, and C.I. Pigment Violet (hereinafter sometimes simply referred to as "PV") 3, PV19, PV23, PV29, PV30, PV37, PV50 and PV88, and C.I. Pigment Orange (hereinafter sometimes simply referred to as "PO") 13, PO16, PO20 and PO36.

Examples of the blue or cyan pigment include C.I. Pigment Blue (hereinafter sometimes simply referred to as "PB") 1, PB15, PB15:1, PB15:2, PB15:3, PB15:4, PB15:6, PB16, PB17-1, PB22, PB27, PB28, PB29, PB36, and PB60.

Examples of a green pigment include C.I. Pigment Green (hereinafter sometimes simply referred to as "PG") 7, PG26, PG36 and PG50.

Examples of the black pigment include C.I. Pigment Black (hereinafter sometimes simply referred to as "PBk") 7, PBk26 and PBk28.

1-3-2-3-3. UV Absorber

Examples of the UV absorber include benzophenone compounds, benzotriazole compounds, salicylic acid ester compounds, hydroxyphenyltriazine compounds and cyanoacrylate compounds known as UV absorbers.

1-3-2-3-4. Dispersant

The dispersant can be used for increasing dispersibility of the pigment for obtaining sufficient coloring. Examples of the dispersant include a hydroxyl group-containing carboxylic acid ester known as a dispersant, a salt of a long chain polyaminoamide and a high molecular weight acid ester, a salt of high molecular weight polycarboxylic acid, a salt of a long chain polyaminoamide and a polar acid ester, a high molecular weight unsaturated acid ester, a high molecular weight copolymer, modified polyurethane, modified polyacrylate, a polyether ester type anionic active agent, a naphthalene sulfonic acid formalin condensate salt, an aromatic sulfonic acid formalin condensate salt, a polyoxyethylene alkyl phosphoric acid ester, a polyoxyethylene nonylphenyl ether and stearyl amine acetate.

A content of the dispersant can be, for example, 20mass% or more and 70mass% or less with respect to the total mass of the pigment.

1-3-2-3-5. Polymerization Inhibitor

Examples of the polymerization inhibitor include (alkyl)phenol, hydroquinone, catechol, resorcin, p-methoxyphenol, t-butyl catechol, t-butyl hydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)anilineoxide, dibutyl cresol, cyclohexanone oxime cresol, guaiacol, o-isopropylphenol, butyraldoxime, methyl ethyl ketoxime and cyclohexanone oxime.

1-3-2-3-6. Surfactant

Examples of the surfactant include anionic surfactants such as dialkyl sulfosuccinates, alkyl naphthalene sulfonates and fatty acid salts, nonionic surfactants such as polyoxyethylene alkyl ethers, polyoxyethylene alkyl allyl ethers, acetylene glycols and polyoxyethylene-polyoxypropylene block copolymers, cationic surfactants such as alkyl amine salts and quaternary ammonium salts, and silicone-based or fluorine-based surfactants.

1-3-2-4. Physical Properties

From the viewpoint of further improving the ejection property from an inkjet head, the viscosity of the inkjet ink at 80°C is preferably 3 mPa·s or more and 20 mPa·s or less. Besides, from the viewpoint of sufficiently causing gelation of the ink when it is cooled to normal temperature after landing, the viscosity of the inkjet ink at 25°C is preferably 1000 mPa·s or more.

The gelling temperature of the inkjet ink is preferably 40°C or more and 70°C or less. When the gelling temperature of the ink is 40°C or more, the ink rapidly undergoes gelation after landing on a recording medium, and hence the property for pinning is further increased. When the gelling temperature of the ink is 70°C or less, the ink is difficult to undergo gelation in ejecting the inkjet ink from the inkjet head where the ink temperature is usually about 80°C, and therefore, the ink can be more stably ejected.

The viscosity of the inkjet ink at 80°C, the viscosity at 25°C and the gelling temperature of the inkjet ink can be obtained by measuring change of dynamic viscoelasticity of the ink depending on temperature with a rheometer. In the present invention, these viscosities and the gelling temperature have values obtained by the following method: The inkjet ink is heated to 100°C, and while measuring the viscosity using a stress controlled rheometer, Physica MCR301 (cone plate diameter: 75 mm, cone angle: 1.0°), manufactured by Anton Paar Gmbh, the ink is cooled down to 20°C under conditions of a shear rate of 11.7 (1 /s) and a temperature decrease rate of 0.1 °C/s to obtain a temperature-dependent viscosity change curve. The viscosity at 80°C and the viscosity at 25°C are obtained by reading viscosities at 80°C and 25°C on the temperature-dependent viscosity change curve respectively. The gelling temperature is obtained as a temperature at which the viscosity is 200 mPa·s on the temperature-dependent viscosity change curve.

When the gel ink contains a pigment, from the viewpoint of further improving the ejection property from the inkjet head, an average particle size of a pigment particle is preferably 0.08 μm or more and 0.5 μm or less, and the maximum particle size is preferably 0.3 μm or more and 10 μm or less. Such average particle sizes of the pigment particle are values obtained by a dynamic light scattering method using Zetasizer Nano ZSP, manufactured by Malvern Instruments Ltd. An ink containing a colorant has such a high density that light does not transmit therethrough in using this measurement equipment, and hence the ink is diluted by 200 times before the measurement. The measurement temperature is set to normal temperature (25°C).

1-3-2-5. Preparation of Ink

The gel ink can be obtained, for example, by mixing the photocurable compound, the gelling agent and optional components under heating. The mixture thus obtained is preferably filtered through a predetermined filter. In preparation of an inkjet ink containing a pigment and a dispersant, a pigment dispersion containing the pigment and the dispersant dispersed in a solvent may be precedently prepared, so as to add the other components thereto and mix the resultant under heating.

A pigment and a dispersant are dispersed, for example, using a ball mill, a sand mill, an attritor, a roll mill, an agitator, a Henschel mixer, a colloid mill, an ultrasonic homogenizer, a pearl mill, a wet jet mill, or a paint shaker.

1-4. Actinic Radiation Irradiating Step

In the actinic radiation irradiating step, the gel ink having landed is irradiated with the actinic radiation to cure the gel ink.

From the viewpoint of increasing the curing property of the gel ink, the actinic radiation irradiates preferably within 0.001 seconds or more and 2.0 seconds or less after the landing of the ink, and from the viewpoint of facilitating the formation of a more refined image, more preferably within 0.001 seconds or more and 1.0 second or less.

Examples of the actinic radiation usable for irradiating the ink in the present embodiment include electron beams, ultraviolet rays, $\alpha$-rays, $\gamma$-rays and X-rays. Among these, ultraviolet rays are preferably used for the irradiation from the viewpoint of handleability and little effect on human body. From the viewpoint of suppressing occurrence of ink curing failure otherwise caused when a component adjusted gel ink is melted by radiant heat of a light source, the light source is preferably a light-emitting diode (LED). Examples of the LED light source usable for curing a component adjusted gel ink through irradiation with the actinic radiation include 395 nm, water-cooled LEDs, manufactured by Phoseon Technology, Inc., Heraeus, Kyocera Corporation, HOYA Corporation, and Integration Technology Ltd.

The amount of light of the actinic radiation used for the irradiation is preferably 200 mJ/cm$^2$ or more and 1000 mJ/cm$^2$. When the amount of light is 200 mJ/cm$^2$ or more, the photocurable compound can be sufficiently polymerized and crosslinked to sufficiently increase the hardness of a cured film. When the amount of light is 1000 mJ/cm$^2$ or less, degradation of the property for pinning otherwise caused through remelting of the gelling agent due to the heat of the irradiating light is difficult to occur, and in addition, the resultant crosslinked structure is not too dense and hence is difficult to crack. From these points of view, the amount of actinic light used for the irradiation is more preferably 300 mJ/cm$^2$ or more and 800 mJ/cm$^2$ or less, and further preferably 350 mJ/cm$^2$ or more and 500 mJ/cm$^2$ or less.

2. Image Forming System

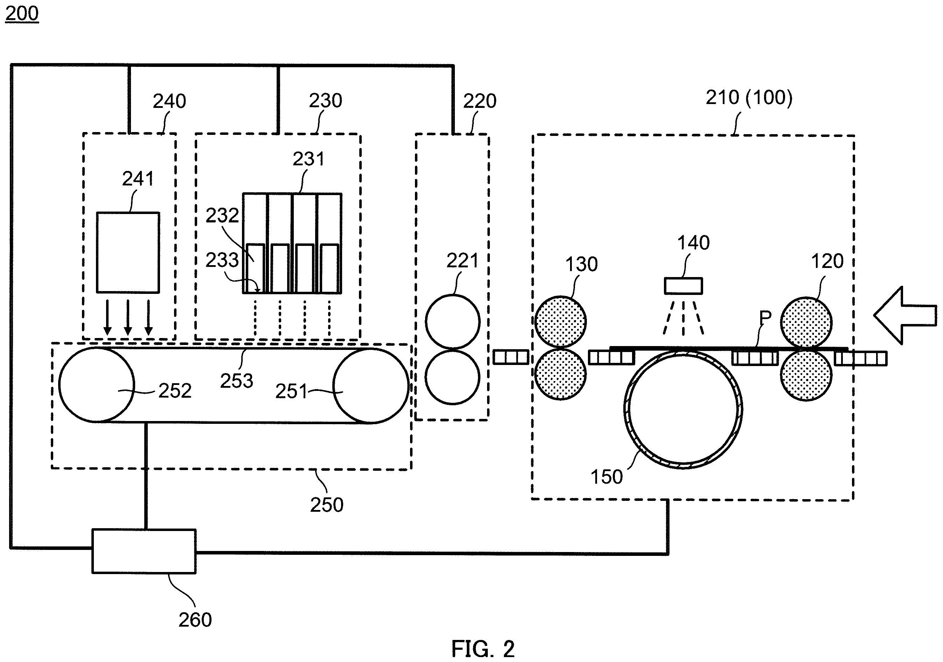

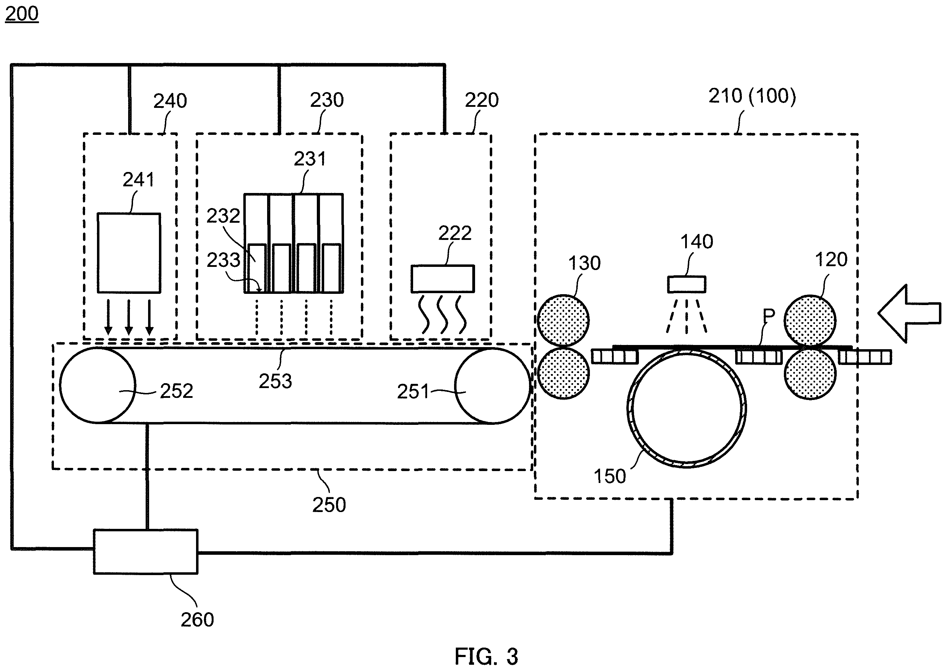

Another embodiment of the present invention relates to an inkjet image forming system capable of practicing the above-described method. FIGS. 2 and 3 are side views illustrating the concept of inkjet image forming system 200 according to the present embodiment.

As illustrated in FIGS. 2 and 3, image forming system 200 include discharge treatment section 210, heating section 220, ink ejection section 230, actinic radiation irradiation section 240, conveyance section 250 and control section 260. It is noted that an arrow indicates the conveyance direction of a recording medium in FIGS. 2 and 3.

Image forming system 200 may include discharge treatment section 210 in a separate housing from a housing of the other sections of heating section 220, ink ejection section 230, actinic radiation irradiation section 240 and conveyance section 250 with the recording medium moved between these housings, but in order that the above-described landing step can be performed within 60 seconds after the discharge treatment step, these sections are preferably provided in the same housing.

2-1. Discharge Treatment Section 210

Discharge treatment section 210 performs the above-described discharge treatment on recording medium P conveyed thereto.

Discharge treatment section 210 can perform the discharge treatment by using corona treatment apparatus 100 having a structure in which recording medium P (corrugated cardboard) is conveyed, between feeding roller 120 and receiving roller 130, on dielectric roll 150 provided to oppose electrode 140. At this point, a voltage is applied between electrode 140 and dielectric roll 150 to cause discharge, and recording medium P corresponding to the corrugated cardboard is conveyed on the dielectric roll with the outermost surface of the liner disposed to face the electrode, and thus, the outermost surface of the liner is subjected to the discharge treatment.

2-2. Heating Section 220

Heating section 220 heats the outermost surface of the liner of the recording medium P corresponding to the corrugated cardboard.

Heating section 220 may employ a structure in which recording medium P is heated from the side of the outermost surface, or a structure in which recording medium P is heated from a side of a surface opposite to the outermost surface (rear surface). As described above, however, if recording medium P corresponding to the corrugated cardboard is heated merely from the rear surface side, a necessary amount of heat may be large in some cases, and in addition, unevenness may be caused on the outermost surface after the heating. Therefore, from the viewpoint of improving heating efficiency and stably performing the heating, the heating is preferably performed at least from the side of the outermost surface of the recording medium, and the heating is more preferably performed from the side of the outermost surface in combination with heating from the rear surface side.

Heating section 220 may be configured by contact heater 221 such as a rubber heater or a warmed roller as illustrated in FIG. 2, or may be configured by non-contact heater 222 such as infrared irradiation (IR irradiation) or hot air blowing as illustrated in FIG. 3. Besides, heating section 220 may be configured by a combination of a contact heater and a non-contact heater.

2-3. Ink Ejection Section 230

Ink ejection section 230 includes at least inkjet head 231, and ejects the gel ink from inkjet head 231 to cause the gel ink to land on the outermost surface of the liner of recording medium P corresponding to the corrugated cardboard conveyed by conveyance section 250.

Inkjet head 231 has, on a surface opposing conveyance section 250, nozzle surface 233 on which an ejection port of nozzle 232 is provided, and ejects the above-described gel ink to the outermost surface of the liner of recording medium P conveyed by conveyance section 250. From the viewpoint of improving the ejection property by solation of the gel ink, inkjet head 231 may have a temperature adjusting section for adjusting the temperature of the ink to make the ink have low viscosity. Examples of the temperature adjusting section include heating sections using a panel heater, a ribbon heater and warm water.

Inkjet head 231 may be either of an on-demand inkjet head and a continuous inkjet head. Examples of the on-demand inkjet head include those employing the electro-mechanical conversion method of single cavity type, double cavity type, bender type, piston type, share-mode type and shared wall type, and those employing the electrothermal conversion method of thermal inkjet type and bubble jet (bubble jet being a registered trademark of Canon Inc.) type.

Besides, inkjet head 231 may be a scan type inkjet head having a width in the direction perpendicular to the conveyance direction of recording medium P smaller than the recording medium, or a line type inkjet head having a width in the direction perpendicular to the conveyance direction of the recording medium larger than the recording medium.

Nozzle 232 has an ejection port on nozzle surface 233. The number of nozzles 232 can be equal to or larger than the number of (for example, four) inks used in forming an image. When inkjet head 231 includes a plurality of nozzles 232, the plurality of nozzles 232 are preferably provided to align at substantially equal intervals along the conveyance direction of the recording medium from the viewpoint of simplifying the structure of the apparatus to be easily controlled.

Ink ejection section 230 may further include an ink tank (not shown) for holding the inkjet ink before the ejection, and an ink passage (not shown) connecting the ink tank and inkjet head 110 for the ink to pass therethrough, or the like.

2-4. Actinic Radiation Irradiation Section 240

Actinic radiation irradiation section 240 includes light source 241, and irradiates an upper surface of conveyance section 250 with the actinic radiation from the light source.

Actinic radiation irradiation section 240 can irradiate, with the actinic radiation, a droplet of the gel ink having landed on conveyed recording medium P to cure the droplet. Actinic radiation irradiation section 240 can be provided directly above conveyance section 250 on the downstream side from inkjet head 231. From the viewpoint of suppressing occurrence of ink curing failure otherwise caused when the gel ink is melted by radiant heat of the light source, the light source is preferably a light-emitting diode (LED). An example of the LED light source usable for curing the inkjet ink through irradiation with the actinic radiation includes 395 nm, water-cooled LED, manufactured by Phoseon Technology, Inc.

2-5. Conveyance Section 250

Conveyance section 250 conveys recording medium P so that recording medium P opposing inkjet head 231 can move directly vertically below inkjet head 231 in forming an image.

Conveyance section 250 includes, for example, driving roller 251 and driven roller 252, and conveyance belt 253.

Driving roller 251 and driven roller 252 are disposed at a predetermined distance in the conveyance direction of recording medium P to extend in a direction perpendicular to the conveyance direction of recording medium P. Driving roller 251 is rotated by a driving source not shown.

Conveyance belt 253 is a belt for conveying recording medium P placed thereon, and is stretched between driving roller 251 and driven roller 252. Conveyance belt 253 can be, for example, an endless belt having a width larger than that of recording medium P. At this point, when the driving source rotates driving roller 251, conveyance belt 253 is rotated to follow driving roller 251, and thus, recording medium P placed on conveyance belt 253 is conveyed.

2-6. Control Section 260

Control section 260 includes a hardware processor such as a central processing unit, and the like, and controls the operations of discharge treatment section 210, heating section 220, inkjet head 231, actinic radiation irradiation section 240, conveyance section 250 and the like to form an image.

2-7. Other Structure

Image forming system 200 may include, in addition to the above-described structure, a sheet feed section (not shown) including a sheet feeding cassette and a sheet feed roller for feeding recording medium P for forming an image thereon, and a sheet ejection section (not shown) including a sheet ejection roller and a sheet ejecting cassette for ejecting recording medium P on which the image has been formed.

2-8. Formation of Image using Image Forming System 200

Control section 260 controls discharge treatment section 210 to perform the discharge treatment, with a dosage of 10 W·min/m$^2$ or more and 200 W·min/m$^2$ or less, on the outermost surface of the liner of recording medium P corresponding to the corrugated cardboard having been fed by the feeding roller from the sheet feeding cassette.

Thereafter, control section 260 controls heating section 220 to heat the outermost surface of the liner of recording medium P.

Thereafter, control section 260 controls ink ejection section 230 to eject, from inkjet head 231, a droplet of the gel ink in color corresponding to an image to be formed, and cause the droplet to land on a portion where the image is to be formed on the outermost surface of the liner of recording medium P having moved.

Then, control section 260 controls actinic radiation irradiation section 240 to irradiate, with the actinic radiation, the outermost surface of the liner of recording medium P on which the droplet of the gel ink has landed. In this manner, a desired image is formed on the recording medium.

During the above-described operation, control section 260 controls conveyance section 250 to drive conveyance belt 253 using driving roller 251 for moving recording medium P placed on conveyance belt 253 in the direction shown with the arrow in the drawing. Besides, control section 260 controls conveyance section 250 to eject the gel ink from ink ejection section 230 to cause the gel ink to land on the same recording medium P within 60 seconds after discharge treatment section 210 has performed the discharge treatment on recording medium P.

Examples

Now, the present invention will be more specifically described, and it is noted that the present invention is not limited to the following description.

[Experiment using Actinic Radiation-Curable Ink]

1. Preparation of Actinic Radiation-Curable Ink

1-1. Preparation of Pigment Dispersion

Pigment dispersions of yellow (Y), magenta (M), cyan (C) and black (K) were prepared in the following manner, and gelling temperatures of the respective dispersions were measured.

(Preparation of Y Pigment Dispersion)

The following two compounds were put in a stainless steel beaker and dissolved by stirring under heating over 1 hour on a hot plate at 65°C.

Pigment dispersant: PB824 (manufactured by Ajinomoto Fine-Techno Co., Ltd.) 9 parts by mass
Photocurable compound: tripropylene glycol diacrylate 71 parts by mass

Subsequently, the solution thus obtained was cooled to room temperature, 20 parts of the following yellow (Y) pigment was added thereto, the resultant was put in a glass bottle together with 200 g of zirconia beads having a diameter of 0.5 mm, and the bottle was tightly stopped and subjected to a dispersion treatment for 8 hours using a paint shaker. Thereafter, the zirconia beads were removed to obtain a Y pigment dispersion.
Yellow pigment: Pigment Yellow 180 (manufactured by Dainichiseika Color & Chemicals Mfg. Co., Ltd., Chromo Fine Yellow 6280JC)

(Preparation of M Pigment Dispersion)

An M pigment dispersion was prepared in the same manner as the Y pigment dispersion except that the Y pigment was changed to the following magenta (M) pigment:
Magenta pigment: Pigment Red 122 (manufactured by Dainichiseika Color & Chemicals Mfg. Co., Ltd., Chromo Fine Red 6112JC)

(Preparation of C Pigment Dispersion)

A C pigment dispersion was prepared in the same manner as the Y pigment dispersion except that the Y pigment was changed to the following cyan (C) pigment:
Cyan pigment: Pigment Blue 15:4 (manufactured by Dainichiseika Color & Chemicals Mfg. Co., Ltd., Chromo Fine Blue 6332JC)

(Preparation of K Pigment Dispersion)

A K pigment dispersion was prepared in the same manner as the Y pigment dispersion except that the Y pigment was changed to the following black (K) pigment:
Black pigment: Pigment Black 7 (manufactured by Mitsubishi Chemical Corporation, #52)

1-2. Preparation of Inks C1 to C5

The C pigment dispersion was mixed with respective components listed below in accordance with the composition of each ink shown in Table 1 below, and the resultant was heated to 80°C and stirred. The solution thus obtained was filtered, under heating, through a Teflon (R) membrane filter (5 μm) manufactured by ADVANTEC Co., Ltd. to obtain each of inks C1 to C5.
It is noted that the components are shown in units of mass% in Table 1.

1-3. Preparation of Inks Y1 to Y5

Inks Y1 to Y5 were obtained in the same manner as inks C1 to C5 except that the pigment dispersion was changed from the C pigment dispersion to the Y pigment dispersion in Table 1.

1-4. Preparation of Inks M1 to M5

Inks M1 to M5 were obtained in the same manner as inks C1 to C5 except that the pigment dispersion was changed from the C pigment dispersion to the M pigment dispersion in Table 1.

1-5. Preparation of Inks K1 to K5

Inks K1 to K5 were obtained in the same manner as inks C1 to C5 except that the pigment dispersion was changed from the C pigment dispersion to the K pigment dispersion in Table 1.

(Materials of Ink)

[Gelling Agent]

Distearyl ketone: Kao Wax T1 (numbers of carbon atoms: 17-17), manufactured by Kao Corporation
Behenyl behenate: UNISTAR M-2222SL (numbers of carbon atoms: 21-22), manufactured by NOF Corporation
Lauric acid amide: DIAMID Y (number of carbon atoms: 12), manufactured by Nippon Kasei Chemical Co., Ltd.
Glycerin monocaprate: POEM M200 (number of carbon atoms: 10), manufactured by Riken Vitamin Co., Ltd.
Behenyl acrylate: BLEMMER VA (number of carbon atoms: 22, containing a polymerizable group), manufactured by NOF Corporation
Montanic acid: octacosanoic acid (number of carbon atoms: 27), manufactured by Nagara Science Co., Ltd.

It is noted that numbers of carbon atoms shown in the parentheses following the distearyl ketone correspond to the numbers of carbon atoms of two hydrocarbon groups separated by a carbonyl group respectively, and numbers of carbon atoms shown in the parentheses following the behenyl behenate correspond to the numbers of carbon atoms of two hydrocarbon groups separated by an ester group respectively. In addition, numbers of carbon atoms shown in the parentheses following the lauric acid amide, the glycerin monocaprate, the behenyl acrylate and the montanic acid correspond to the numbers of carbon atoms of a hydrocarbon group bonded to an amide group, a hydroxy group of glycerin, an acryloyl group and a carboxy group, respectively.

[Photocurable Compound]

PEGDA: polyethylene glycol #400 diacrylate (manufactured by Shin-Nakamura Chemical Co., Ltd., NK Ester A-400, molecular weight: 508)
6EO-TMPTA: 6EO-modified trimethylolpropane triacrylate (manufactured by SARTOMER Company Inc., SR499, molecular weight: 428)

[Polymerization Inhibitor]

UV10: Irgastab UV10, manufactured by BASF

[Photopolymerization Initiator]

TPO: DAROCUR TPO, manufactured by BASF
819: IRGACURE 819, manufactured by BASF

[Surfactant]

Silicone-based surfactant: KF-352, manufactured by Shin-Etsu Chemical Co., Ltd.

(Measurement of Gelling Temperature of Ink)

The gelling temperature (Tgel) (°C) of each ink prepared as described above was measured in the following manner:
The ink was heated to 100°C, and then cooled to 20°C under conditions of a shear rate of 11.7/s and a temperature decrease rate of 0.1 °C/s to obtain a temperature-dependent viscosity change curve through measurement with a rheometer. A temperature, on the temperature-dependent viscosity change curve thus obtained, at which the viscosity is 200 mPa·s was obtained as the gelling temperature. As the rheometer, a stress controlled rheometer, Physica MCR series manufactured by Anton Paar Gmbh was used with a cone plate diameter set to 75 mm and a cone angle set to 10°. The gelling temperatures of the respective inks are shown in Table 1.
It is noted that numerical values shown in Table 1 are in units of mass% in the corresponding ink for the respective substances, and in units of °C for the gelling temperatures.

[Table 1]

Table 1: Inks C1 to C5

| | | | C1 | C2 | C3 | C4 | C5 |
|---|---|---|---|---|---|---|---|
| Composition | Gelling Agent | Distearyl ketone | | 1.0 | | | |
| | | Behenyl behenate | | 1.0 | | | |
| | | Lauric acid amide | 2.0 | | | | |
| | | Glycerin monocaprylate | | | 1.0 | | |
| | | Behenyl acrylate | | | | 2.0 | |
| | | Montanic acid | | | | | 1.3 |
| | Photocurable Compound | PEGDA | 43.8 | 43.8 | 44.8 | 43.8 | 44.5 |
| | | 6EO-TMPTA | 30.0 | 30.0 | 30.0 | 30.0 | 30.0 |
| | Polymerization Inhibitor | UV10 | 0.1 | 0.1 | 0.1 | 0.1 | 0.1 |
| | Photopolymerization Initiator | TPO | 6.0 | 6.0 | 6.0 | 6.0 | 6.0 |
| | | 819 | 3.0 | 3.0 | 3.0 | 3.0 | 3.0 |
| | Silicone-based Surfactant | | 0.1 | 0.1 | 0.1 | 0.1 | 0.1 |
| | C Pigment Dispersion | | 15.0 | 15.0 | 15.0 | 15.0 | 15.0 |
| Gelling Temperature (°C) | | | 45 | 55 | 43 | 44 | 52 |

A combination of inks Y1, M1, C1 and K1 was defined as ink set 1. A combination of inks Y2, M2, C2 and K2 was defined as ink set 2. A combination of inks Y3, M3, C3 and K3 was defined as ink set 3. A combination of inks Y4, M4, C4 and K4 was defined as ink set 4. A combination of inks Y5, M5, C5 and K5 was defined as ink set 5.

2. Formation of Image

An image was formed on each of recording media shown in Table 2.
[Table 2]

Table 2: List of Recording Media

| Product Name | Manufacturer | Thickness (mm) | Remarks |
|---|---|---|---|
| E Flute | Rengo Co., Ltd. | 1.5 | Corrugated Cardboard |
| F Flute | Crown Package Co., Ltd. | 1.2 | Corrugated Cardboard |
| G Flute | Nippon Tokan Package Co., Ltd. | 0.9 | Corrugated Cardboard |
| Ester Film E5000 | Toyobo Co., Ltd. | 0.05 | PET Film |

2-1. Discharge Treatment

The recording media shown in Table 2 were subjected to the discharge treatment. Specifically, Digi-Co Primer, manufactured by BN Technology Corporation, was used as the corona treatment apparatus, and each recording medium was subjected to the discharge treatment by causing the recording medium to pass below the corona treatment apparatus under conditions shown in Table 3. It is noted that a ceramic electrode was used as an electrode of the corona treatment apparatus, and that a gap between the electrode and a dielectric was set to 2.5 mm.
[Table 3]

Table 3: Conditions for Corona Treatment

| Treatment Conditions | Speed (m/min) | Power (W) | Dosage (W-min/M$^2$) |
|---|---|---|---|
| 1 | 100.0 | 220.0 | 5 |
| 2 | 50.0 | 220.0 | 10 |

(continued)

| Treatment Conditions | Speed (m/min) | Power (W) | Dosage (W-min/M²) |
|---|---|---|---|
| 3 | 25.0 | 220.0 | 20 |
| 4 | 10.0 | 220.0 | 50 |
| 5 | 5.0 | 220.0 | 100 |
| 6 | 3.3 | 220.0 | 150 |
| 7 | 2.5 | 220.0 | 200 |
| 8 | 2.3 | 220.0 | 220 |

2-2. Heating of Recording Medium

A commercially available silicon rubber heater (manufactured by AS ONE Corporation) was attached to a conveyance table and placed, so that the temperature on the surface of the conveyance table could be set to a range between about 30°C and about 60°C. The recording medium was placed thereon, the end portions thereof were fixed with a tape so as to prevent the substrate from warping, the surface temperature of the recording medium was measured with a contact thermometer (TCT430WR, manufactured by Trusco Nakayama Corporation), and the temperature of the rubber heater was set so that the surface temperature of the recording medium could be a predetermined temperature.

2-3. Ejection of Ink and Irradiation with Actinic Radiation

Any one of ink sets 1 to 5 adjusted as described above was set in an inkjet recording apparatus including an ink tank, an ink passage and a piezoelectric inkjet recording head, and the inks present in a region from the ink tanks to a head portion were heated. The inks included in the ink set thus set were ejected from the inkjet recording head to be caused to land on each of the recording media shown in Table 2 subjected to the discharge treatment under each of the conditions shown in Table 3, so as to form a cyan solid image and a color image (high-definition color digital standard images N5 and S6A, JIS X9201: 1995) with a resolution of 600 x 600 dpi. As the piezoelectric head, KM 1800 iSHC was used, and a voltage was applied so that a droplet of 3.5 pl or more and 14.0 pl or less could be ejected.

Within I second after the printing, the inks having landed were irradiated with the actinic radiation by an LED lamp (395 nm, 8 W/cm², manufactured by Phoseon Technology, Inc). A distance from a tube surface of the LED lamp to the recording medium was set to 30 mm (with an irradiation width in the conveyance direction of 150 mm). The conveying speed of the recording medium was set to accord with the conditions for the corona treatment.

At this point, timing of ejecting the ink was adjusted so that a time interval from the discharge treatment to the irradiation with the actinic radiation could be a time shown in Table 4, 5 or 6.

Tables 4, 5 and 6 show the ink sets, the recording media, the dosages, the heating temperatures and the time intervals from the discharge treatment to the irradiation with the actinic radiation (which are shown as "Treatment Time" in Tables 4 and 5) employed in forming the images.

[Table 4]

Table 4: Conditions for Forming Image Nos. 1 to 26

| Image No. | Ink Set | Recording Medium | Dosage (Wmin/m$^2$) | Heating Temperature (°C) | Treatment Time (sec) |
|---|---|---|---|---|---|
| 1 | 1 | G Flute | 0 | 35 | 0 |
| 2 | | | 5 | | 10 |
| 3 | | | 10 | | 10 |
| 4 | | | 50 | | 10 |
| 5 | | | 200 | | 10 |
| 6 | | | 220 | | 10 |
| 7 | | | 5 | | 60 |
| 8 | | | 10 | | 60 |
| 9 | | | 50 | | 60 |
| 10 | | | 200 | | 60 |
| 11 | | | 220 | | 60 |
| 12 | | | 5 | | 90 |
| 13 | | | 10 | | 90 |
| 14 | | | 50 | | 90 |
| 15 | | | 200 | | 90 |
| 16 | | | 220 | | 90 |
| 17 | 2 | F Flute | 0 | 45 | 0 |
| 18 | | | 10 | | 10 |
| 19 | | | 50 | | 10 |
| 20 | | | 200 | | 10 |
| 21 | | | 10 | | 60 |
| 22 | | | 50 | | 60 |
| 23 | | | 220 | | 60 |
| 24 | | | 10 | | 90 |
| 25 | | | 50 | | 90 |
| 26 | | | 200 | | 90 |

[Table 5]

Table 5: Conditions for Forming Image Nos. 27 to 46

| Image No. | Ink Set | Recording Medium | Dosage (W-min/M$^2$) | Heating Temperature (°C) | Treatment Time (sec) |
|---|---|---|---|---|---|
| 27 | 3 | G Flute | 0 | 35 | 0 |
| 28 | | | 10 | | 10 |
| 29 | | | 50 | | 10 |
| 30 | | | 200 | | 10 |
| 31 | | | 10 | | 60 |
| 32 | | | 50 | | 60 |
| 33 | | | 220 | | 60 |
| 34 | | | 10 | | 90 |
| 35 | | | 50 | | 90 |
| 36 | | | 200 | | 90 |
| 37 | 4 | E Flute | 0 | 35 | 0 |
| 38 | | | 10 | | 10 |
| 39 | | | 50 | | 10 |
| 40 | | | 200 | | 10 |
| 41 | | | 10 | | 60 |
| 42 | | | 50 | | 60 |
| 43 | | | 220 | | 60 |
| 44 | | PET | 0 | | 0 |
| 45 | | | 50 | | 30 |
| 46 | | | 200 | | 30 |

[Table 6]

Table 6: Conditions for Forming Image Nos. 47 to 56

| Image No. | Ink Set | Recording Medium | Dosage (W-min/M$^2$) | Heating Temperature (°C) | Treatment Time (sec) |
|---|---|---|---|---|---|
| 47 | 5 | G Flute | 0 | 40 | 0 |
| 48 | | | 10 | | 10 |
| 49 | | | 50 | | 10 |
| 50 | | | 200 | | 10 |
| 51 | | | 10 | | 60 |
| 52 | | | 50 | | 60 |
| 53 | | | 220 | | 60 |
| 54 | | | 10 | | 90 |
| 55 | | | 50 | | 90 |
| 56 | | | 200 | | 90 |

3. Evaluation

Images 1 to 56 thus obtained were evaluated in accordance with the following criteria:

3-1. Solid Printing

Dot missing in each image was visually checked, and the image was evaluated in accordance with the following criteria:

A: No dot missing is visually found.
C: Dot missing is visually found.

3-2. Fine Line Formation

A fine line portion in each image N5 was observed at 500-fold magnification using an optical microscope VHX-5000 manufactured by Keyence Corporation, and the image was evaluated in accordance with the following criteria:

A: Individual dots are dependently formed, and reproducibility of fine lines is high.
B: Some dots are slightly combined, but reproducibility of fine lines is good.
C: Most of dots are combined, and reproducibility of fine lines is inappropriate.

3-3. Color Unevenness

In a portion of gradation expression from halftone to highlight in each color of each image S6A, it was visually checked whether or not color unevenness of the image (that is, unevenness in image density along irregularities of the corrugating medium of a corrugated cardboard in using the corrugated cardboard as the recording medium) was caused, and each image was evaluated in accordance with the following criteria:

A: Smooth gradation expression is obtained without color unevenness.
B: Partial color unevenness is caused, but the gradation expression in the whole image is good and does not give discomfort.
C: Color unevenness is wholly caused, and the gradation expression is inappropriate.

The results are shown in Tables 7 to 9.
[Table 7]

Table 7: Evaluation of Image Nos. 1 to 26

| Image No. | Solid Printing | Fine Line Formation | Color Unevenness |
|---|---|---|---|
| 1 | C | A | C |
| 2 | C | A | C |
| 3 | A | A | A |
| 4 | A | A | A |
| 5 | A | B | A |
| 6 | A | C | A |
| 7 | C | A | C |
| 8 | A | A | A |
| 9 | A | A | A |
| 10 | A | B | A |
| 11 | A | C | A |
| 12 | C | A | C |
| 13 | C | A | C |
| 14 | C | A | C |
| 15 | C | A | C |
| 16 | C | B | C |

(continued)

| Image No. | Solid Printing | Fine Line Formation | Color Unevenness |
|---|---|---|---|
| 17 | C | A | C |
| 18 | A | A | A |
| 19 | A | A | A |
| 20 | A | A | A |
| 21 | A | A | A |
| 22 | A | A | A |
| 23 | A | C | A |
| 24 | C | A | C |
| 25 | C | A | C |
| 26 | C | A | C |

[Table 8]

Table 8: Evaluation of Image Nos. 27 to 46

| Image No. | Solid Printing | Fine Line Formation | Color Unevenness |
|---|---|---|---|
| 27 | C | C | C |
| 28 | C | C | C |
| 29 | C | C | C |
| 30 | C | C | C |
| 31 | C | C | C |
| 32 | C | C | c |
| 33 | C | C | C |
| 34 | C | B | C |
| 35 | C | B | C |
| 36 | C | B | C |
| 37 | C | A | C |
| 38 | A | A | A |
| 39 | A | A | A |
| 40 | A | B | A |
| 41 | A | A | A |
| 42 | A | A | A |
| 43 | A | C | A |
| 44 | C | A | A |
| 45 | C | A | A |
| 46 | C | A | A |

[Table 9]

Table 9: Evaluation of Image Nos. 47 to 56

| Image No. | Solid Printing | Fine Line Formation | Color Unevenness |
|---|---|---|---|
| 47 | C | A | C |
| 48 | C | B | C |
| 49 | C | B | C |
| 50 | C | B | C |
| 51 | C | A | C |
| 52 | C | B | C |
| 53 | C | B | C |
| 54 | C | A | C |
| 55 | C | B | C |
| 56 | C | B | C |

As shown in Tables 7 to 9, images evaluated as good in all of the solid printing, the color unevenness and the fine line formation were formed by subjecting the corrugated cardboard to the discharge treatment with a dosage of 10 $W\cdot min/m^2$ or more and 200 $W\cdot min/m^2$ or less, ejecting a droplet of the actinic radiation-curable inkjet ink containing the photocurable compound and the gelling agent having an alkyl group having 12 or more and 26 or less carbon atoms to undergo sol-gel phase transition in accordance with temperature, to land on the corrugated cardboard while heating, and irradiating the corrugated cardboard with actinic radiation within 60 seconds after the discharge treatment (image Nos. 3 to 5, 8 to 10, 18 to 22 and 38 to 42).

On the other hand, when the dosage was less than 10 $W\cdot min/m^2$, the solid printing and the color unevenness were evaluated as poor regardless of the time interval from the discharge treatment to the irradiation with the actinic radiation. This is probably because the dosage was so small that the surface energy of the corrugated cardboard could not be sufficiently increased and hence the wetting and spreading of the ink was difficult to be caused on the substrate (image Nos. 1,2,7, 12, 17 and 37).

Alternatively, when the dosage exceeded 200 $W\cdot min/m^2$, the fine line formation was evaluated as poorer regardless of the time interval from the discharge treatment to the irradiation with the actinic radiation. This is probably because the surface energy of the corrugated cardboard was excessively increased and hence the wetting and spreading of dots could not be sufficiently controlled even with the pinning effect of the gelling agent (image Nos. 6, 11, 16, 23 and 43).

Furthermore, when the time interval from the discharge treatment to the irradiation with the actinic radiation exceeded 60 seconds, the solid printing and the color unevenness were evaluated as poor in the same manner as in the case where the dosage was less than 10 $W\cdot min/m^2$ even if the dosage was 10 $W\cdot min/m^2$ or more and 200 $W\cdot min/m^2$ or less. This is probably because the surface energy increased through the discharge had lowered during a period from the discharge treatment to the irradiation with the actinic radiation (image Nos. 13 to 15 and 24 to 26).

Besides, when the number of carbon atoms of the hydrocarbon group of the gelling agent was less than 12, the solid printing, the color unevenness and the fine line formation were all evaluated as poor no matter whether or not the discharge treatment was performed. This is probably because the gelation of the ink caused by the gelling agent was insufficient and hence the property for pinning obtained after the landing was poor, and therefore, a fine line could not be reproduced because of excessive wetting and spreading of the ink, and the solid printing and the color unevenness were caused because droplets were combined (image Nos. 27 to 36).

Alternatively, when the number of carbon atoms of the hydrocarbon group of the gelling agent was 27 or more, the solid printing and the color unevenness were evaluated as poor no matter whether or not the discharge treatment was performed. This is probably because the gelation of the ink caused by the gelling agent was excessive and hence the property for pinning the ink after the landing was too strong, and therefore, wettability necessary for obtaining desired image quality could not be obtained through the discharge treatment (image Nos. 47 to 56).

Besides, when the recording medium was a PET film, the color unevenness was not caused no matter whether or not the discharge treatment was performed. This reveals that the color unevenness is easily caused in a corrugated cardboard. Furthermore, when the recording medium was a PET film, the solid printing was not highly evaluated even if the discharge treatment was performed with a dosage of 10 $W\cdot min/m^2$ or more and 200 $W\cdot min/m^2$ or less. This is probably because the surface energy was not sufficiently increased with this dosage, and hence the wettability of the ink was insufficient (image Nos. 44 to 46).

[Reference Example: Experiment using Water-based Ink]

1. Preparation of Water-based Ink

1-1. Preparation of Pigment Dispersion

As pigment dispersants, 20 parts by mass of Flowlen TG-750W (solid content: 40%), manufactured by Evonik Degussa Gmbh and 3 parts by mass of triethylene glycol monobutyl ether were added to 62 parts by mass of ion-exchanged water. To the resultant solution, 15 parts by mass of C.I. Pigment Blue 15:3 was added to be premixed, and the resultant was then dispersed using a sand grinder filled with 0.5 mm zirconia beads in a volume ratio of 50% to obtain a cyan pigment dispersion of a reference example having a pigment solid content of 15%.

1-2. Preparation of Ink

The cyan pigment dispersion, a resin, an organic solvent, a surfactant and water were mixed by stirring to obtain a composition shown in Table 10, and the resultant was filtered through a filter having a pore size of 0.8 μm to prepare a water-based cyan ink.
It is noted that the components are shown in Table 10 in units of mass%.

(Materials of Ink)

[Resin]

142E: JONCRYL 142E, manufactured by BASF ("JONCRYL" being their registered trademark)

[Organic Solvent]

PG: propylene glycol
Gly: glycerin

[Surfactant]

BYK333: BYK333, manufactured by BYK-Chemie Gmbh ("BYK" being their registered trademark)
[Table 10]

Table 10: Composition of Water-based Cyan Ink

| | | Water-based Cyan Ink |
|---|---|---|
| Cyan Pigment Dispersion of Reference Example | | 5 |
| Resin | 142E | 10 |
| Organic Solvent | PG | 15 |
| | Gly | 10 |
| Surfactant | BYK333 | 0.50 |
| Water | | Balance |

A water-based yellow ink, a water-based magenta ink, the water-based cyan ink and a water-based black ink were combined as a water-based ink set.

2. Formation of Image

The water-based ink set adjusted as described above was set in an inkjet recording apparatus including an ink tank, an ink passage and a piezoelectric inkjet recording head. The water-based inks included in the water-based ink set thus set were ejected, by 4-pass unidirectional printing, from the inkjet recording head to be caused to land on each of recording media of Table 2 subjected to the discharge treatment under each of the conditions shown in Table 11, so as to form a cyan solid image and a color image (high-definition color digital standard images N5 and S6A, JIS X9201: 1995) with a resolution of 360 x 360 dpi. As the piezoelectric head, KM512 iMAB was used, and a voltage was applied so that a droplet of 14 pl or more and 42 pl or less could be ejected. The color image was converted into a monochrome image, and then the image was formed by using the cyan ink alone.

The inkjet printer used a contact heater for optionally warming a recording medium from the rear surface (the surface opposite to the surface facing the head), and included an ink idle ejection position in a head housing position and a blade-wiping type maintenance unit so that the head could be cleaned at an arbitrary frequency.

At this point, timing of ejecting the ink was adjusted so that a time interval from the discharge treatment to the irradiation with the actinic radiation could be a time shown in Table 11.

Besides, immediately after the ink landed on the recording medium, the recording medium on which the ink had landed was placed on a hot plate at 60°C for drying the ink.

Table 11 shows the ink set, the recording media, the dosages, the heating temperatures and the time intervals from the discharge treatment to the irradiation with the actinic radiation (shown as "Treatment Time" in Table 11) employed in forming the images.

[Table 11]

Table 11: Conditions for Forming Image Nos. R1 to R7

| Image No. | Ink Set | Recording Medium | Dosage (W·min/m$^2$) | Heating Temperature (°C) | Treatment Time (sec) |
|---|---|---|---|---|---|
| R1 | Water-based Ink Set | G Flute | 0 | 50 | 0 |
| R2 | | G Flute | 10 | | 10 |
| R3 | | G Flute | 50 | | 10 |
| R4 | | F Flute | 200 | | 10 |
| R5 | | F Flute | 50 | | 30 |
| R6 | | F Flute | 100 | | 30 |
| R7 | | E Flute | 150 | | 30 |

Images R1 to R7 thus obtained were evaluated in the same manner as described in [Experiment using Actinic Radiation-Curable Ink] above. The results are shown in Table 12.

[Table 12]

Table 12: Evaluation of Image Nos. R1 to R7

| Image No. | Solid Printing | Fine Line Formation | Color Unevenness |
|---|---|---|---|
| R1 | C | B | C |
| R2 | C | C | C |
| R3 | C | C | C |
| R4 | C | C | C |
| R5 | C | C | C |
| R6 | C | C | C |
| R7 | C | C | C |

As shown in Table 12, even when the corrugated cardboard was subjected to the discharge treatment with a dosage of 10 W·min/m$^2$ or more and 200 W·min/m$^2$ or less, and a droplet of the water-based inkjet ink was ejected to land thereon while heating, none of the solid printing, the color unevenness and the fine line formation was evaluated as good. This is probably because the wettability on a substrate of the water-based ink is conspicuously low due to a higher polarity thereof than an actinic radiation-curable ink containing a gelling agent, and the property for pinning owing to the gelling agent cannot be exhibited, and hence droplets are easily combined after landing, and therefore the solid printing and the color unevenness can be easily caused (image Nos. R1 to R7).

Industrial Applicability

According to an image forming method of the present invention, a refined image having little color unevenness can be formed even on a corrugated cardboard. Therefore, the present invention is expected to make a contribution to increase of the applicable range of image formation by an inkjet method and to development and spread of technologies of this technical field.

Reference Signs List

| | |
|---|---|
| 100 | Corona treatment apparatus |
| 110 | Stage |
| 120 | Feeding roller |
| 130 | Receiving roller |
| 140 | Electrode |
| 150 | Dielectric roll |
| 160 | AC power supply |
| 200 | Image forming system |
| 210 | Discharge treatment section |
| 220 | Heating section |
| 221 | Contact heater |
| 222 | Non-contact heater |
| 230 | Ink ejection section |
| 231 | Inkjet head |
| 232 | Nozzle |
| 233 | Nozzle surface |
| 240 | Actinic radiation irradiation section |
| 241 | Light source |
| 250 | Conveyance section |
| 251 | Driving roller |
| 252 | Driven roller |
| 253 | Conveyance belt |
| 260 | Control section |

**Claims**

1. An image forming method, comprising:

   subjecting, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner;
   heating the recording medium subjected to the discharge treatment;
   ejecting a droplet of an actinic radiation-curable inkjet ink from a nozzle of an inkjet head within 60 seconds after the discharge treatment, the actinic radiation-curable inkjet ink containing a photocurable compound and a gelling agent having an alkyl group having 12 or more and 26 or less carbon atoms and to undergo sol-gel phase transition depending on temperature, and allowing the droplet to land on the outermost surface of the heated recording medium subjected to the discharge treatment; and
   irradiating the droplet having landed on the outermost surface with actinic radiation.

2. The image forming method according to claim 1, wherein the gelling agent is a compound selected from the group consisting of a compound represented by formula (G1) and a compound represented by formula (G2):

   formula (G1):          R1-CO-R2

   formula (G2):          R3-COO-R4

wherein R1, R2, R3 and R4 all represent a hydrocarbon group having a straight chain portion having 12 or more and 26 or less carbon atoms and optionally having a branched chain.

3. The image forming method according to claim 1 or 2, wherein the heating is performed in such a manner that a temperature of the outermost surface of the liner is lower than a gelling temperature of the ink by 5°C or more and 25°C or less.

4. The image forming method according to any one of claims 1 to 3, wherein the heating is performed from a side of the outermost surface of the liner of the recording medium.

5. The image forming method according to any one of claims 1 to 4, wherein the heating is performed from a side of the outermost surface of the liner of the recording medium and a side of a surface opposite to the outermost surface.

6. An image forming system for practicing the image forming method according to any one of claims 1 to 5, the image forming system comprising:

a discharge treatment section configured to subject, to a discharge treatment with a dosage of 10 W·min/m$^2$ or more and 200 W·min/m$^2$ or less, an outermost surface on which an image is to be formed of a liner of a recording medium corresponding to a corrugated cardboard including a corrugating medium and the liner; a heating section configured to heat the recording medium subjected to the discharge treatment;
an ink ejection section cofigured to eject a droplet of an actinic radiation-curable inkjet ink from a nozzle of an inkjet head, the actinic radiation-curable inkjet ink containing a photocurable compound and a gelling agent having an alkyl group having 12 or more and 26 or less carbon atoms to undergo sol-gel phase transition depending on temperature, and configured to allow the droplet to land on the outermost surface of the heated recording medium subjected to the discharge treatment;
an actinic radiation irradiation section configured to irradiate the droplet having landed on the outermost surface with actinic radiation;
a conveyance section configured to convey the recording medium; and
a control section configured to control a conveying speed of the recording medium by the conveyance section in such a manner that the ink ejection section ejects the droplet of the inkjet ink within 60 seconds after the discharge treatment performed by the discharge treatment section.

**Patentansprüche**

1. Bilderzeugungsverfahren, umfassend:

Ausführen einer Entladungsbehandlung mit einer Dosis von 10 W·min/m$^2$ oder mehr und 200 W·min/m$^2$ oder weniger an einer äußersten, mit einem Bild zu versehenden Oberfläche eines Deckenpapiers eines Aufzeichnungsmediums, welches mit einer ein Wellenpapier und das Deckenpapier beinhaltenden Wellpappe übereinstimmt;
Erwärmen des der Entladungsbehandlung unterzogenen Aufzeichnungsmediums;
Ausstoßen eines Tröpfchens einer mittels aktinischer Strahlung härtbaren Tintenstrahltinte aus einer Düse eines Tintenstrahlkopfes innerhalb von 60 Sekunden nach der Entladungsbehandlung, wobei die mittels aktinischer Strahlung härtbare Tintenstrahltinte eine photohärtbare Verbindung und ein Geliermittel, welches eine Alkylgruppe mit 12 oder mehr und 26 oder weniger Kohlenstoffatomen aufweist, enthält und in Abhängigkeit von der Temperatur und eine Sol-Gel-Phasenumwandlung vollzieht, sowie Auftreffenlassen des Tröpfchens auf die äußerste Oberfläche des erwärmten und der Entladungsbehandlung unterzogenen Aufzeichnungsmediums; und
Bestrahlen des auf der äußersten Oberfläche aufgetroffenen Tröpfchens mit aktinischer Strahlung.

2. Bilderzeugungsverfahren gemäß Anspruch 1, wobei es sich bei dem Geliermittel um eine Verbindung handelt, welche aus der Gruppe bestehend aus einer durch die Formel (G1) dargestellten Verbindung und einer durch die Formel (G2) dargestellten Verbindung ausgewählt ist:

Formel (G1):            R1-CO-R2

Formel (G2):            R3-COO-R4

worin R1, R2, R3 und R4 allesamt für eine Kohlenwasserstoffgruppe stehen, welche einen geradkettigen Abschnitt mit 12 oder mehr und 26 oder weniger Kohlenstoffatomen sowie gegebenenfalls eine verzweigte Kette aufweist.

3. Bilderzeugungsverfahren gemäß Anspruch 1 oder 2, wobei das Erwärmen derart erfolgt, dass die Temperatur der äußersten Oberfläche des Deckenpapiers 5°C oder mehr und 25°C oder weniger unterhalb der Geliertemperatur der Tinte liegt.

4. Bilderzeugungsverfahren gemäß einem der Ansprüche 1 bis 3, wobei das Erwärmen von einer Seite der äußersten Oberfläche des Deckenpapiers des Aufzeichnungsmediums durchgeführt wird.

5. Bilderzeugungsverfahren gemäß einem der Ansprüche 1 bis 4, wobei das Erwärmen von einer Seite der äußersten Oberfläche des Deckenpapiers des Aufzeichnungsmediums sowie von einer Seite einer der äußersten Oberfläche gegenüberliegenden Oberfläche durchgeführt wird.

6. Bilderzeugungssystem zur Durchführung des Bilderzeugungsverfahrens gemäß einem der Ansprüche 1 bis 5, wobei das Bilderzeugungssystem umfasst:

eine Entladungsbehandlungssektion, die derart konzipiert ist, dass sie eine äußerste, mit einem Bild zu versehende Oberfläche eines Deckenpapiers eines Aufzeichnungsmediums, welches mit einer ein Wellenpapier und das Deckenpapier beinhaltenden Wellpappe übereinstimmt, einer Entladungsbehandlung mit einer Dosis von 10 W·min/m$^2$ oder mehr und 200 W·min/m$^2$ oder weniger unterzieht;

eine Heizsektion, die derart konzipiert ist, dass sie das der Entladungsbehandlung unterzogene Aufzeichnungsmedium erwärmt;

einen Tintenausstoßsektion, die derart konzipiert ist, dass sie ein Tröpfchen einer mittels aktinischer Strahlung härtbaren Tintenstrahltinte aus einer Düse eines Tintenstrahlkopfes ausstößt, wobei die mittels aktinischer Strahlung härtbare Tintenstrahltinte eine photohärtbare Verbindung und ein Geliermittel, welche eine Alkylgruppe mit 12 oder mehr und 26 oder weniger Kohlenstoffatomen aufweist, enthält und in Abhängigkeit von der Temperatur einen Sol-Gel-Phasenumwandlung vollzieht, und die derart konzipiert ist, dass sie das Tröpfchen auf die äußerste Oberfläche des erwärmten und der Entladungsbehandlung unterzogenen Aufzeichnungsmediums auftreffen lässt;

eine Bestrahlungssektion für aktinische Strahlung, die derart konzipiert ist, dass sie das auf der äußersten Oberfläche aufgetroffene Tröpfchen mit aktinischer Strahlung bestrahlt;

eine Transportsektion, die derart konzipiert ist, dass sie das Aufzeichnungsmedium transportiert; und

eine Steuersektion, die derart konzipiert ist, dass sie eine Transportgeschwindigkeit des Aufzeichnungsmediums in der Transportsektion auf eine Art und Weise steuert, dass die Tintenausstoßsektion das Tröpfchen der Tintenstrahltinte innerhalb von 60 Sekunden nach der von der Entladungsbehandlungssektion durchgeführten Entladungsbehandlung ausstößt.

## Revendications

1. Procédé de formation d'image, comprenant :

le fait de soumettre, à un traitement par décharge avec un dosage de 10 W·min/m$^2$ ou plus et 200 W·min/m$^2$ ou moins, une surface la plus éloignée sur laquelle une image doit être formée d'un revêtement d'un support d'enregistrement correspondant à un carton ondulé comportant un papier à canneler pour carton ondulé et le revêtement ;

le chauffage du support d'enregistrement soumis au traitement par décharge ;

l'éjection d'une gouttelette d'une encre pour jet d'encre durcissable par rayonnement actinique à partir d'une buse d'une tête à jet d'encre dans les 60 secondes après le traitement par décharge, l'encre pour jet d'encre durcissable par rayonnement actinique contenant un composé photodurcissable et un agent gélifiant ayant un groupe alkyle ayant 12 ou plus et 26 ou moins atomes de carbone pour subir une transition de phase sol-gel en fonction de la température, et le fait de permettre à la gouttelette d'atterrir sur la surface la plus éloignée du support d'enregistrement chauffé soumis au traitement par décharge ; et

l'exposition de la gouttelette ayant atterri sur la surface la plus éloignée à un rayonnement actinique.

2. Procédé de formation d'image selon la revendication 1, dans lequel l'agent gélifiant est un composé sélectionné dans le groupe constitué d'un composé représenté par la formule (G1) et d'un composé représenté par la formule (G2) :

formule (G1) :        R1-CO-R2

formule (G2) :        R3-COO-R4

dans lesquelles R1, R2, R3 et R4 représentent tous un groupe hydrocarboné ayant une partie chaîne droite ayant 12 ou plus et 26 ou moins atomes de carbone et optionnellement ayant une chaîne ramifiée.

3. Procédé de formation d'image selon la revendication 1 ou 2, dans lequel le chauffage est effectué de manière à ce qu'une température de la surface la plus éloignée du revêtement soit inférieure à une température de gélification de l'encre de 5 °C ou plus et de 25 °C ou moins.

4. Procédé de formation d'image selon l'une quelconque des revendications 1 à 3, dans lequel le chauffage est effectué à partir d'un côté de la surface la plus éloignée du revêtement du support d'enregistrement.

5. Procédé de formation d'image selon l'une quelconque des revendications 1 à 4, dans lequel le chauffage est effectué à partir d'un côté de la surface la plus éloignée du revêtement du support d'enregistrement et d'un côté d'une surface opposée à la surface la plus éloignée.

6. Système de formation d'image pour utiliser le procédé de formation d'image selon l'une quelconque des revendications 1 à 5, le système de formation d'image comprenant :

une section de traitement par décharge configurée pour soumettre à un traitement par décharge avec un dosage de 10 W·min/m$^2$ ou plus et 200 W·min/m$^2$ ou moins, une surface la plus éloignée sur laquelle une image doit être formée d'un revêtement d'un support d'enregistrement correspondant à un carton ondulé comportant un papier à canneler pour carton ondulé et le revêtement ;
une section de chauffage configurée pour chauffer le support d'enregistrement soumis au traitement par décharge ;
une section d'éjection d'encre configurée pour éjecter une gouttelette d'une encre pour jet d'encre durcissable par rayonnement actinique à partir d'une buse d'une tête à jet d'encre, l'encre pour jet d'encre durcissable par rayonnement actinique contenant un composé photodurcissable et un agent gélifiant ayant un groupe alkyle ayant 12 ou plus et 26 ou moins atomes de carbone pour subir une transition de phase sol-gel en fonction de la température, et configurée pour permettre à la gouttelette d'atterrir sur la surface la plus éloignée du support d'enregistrement chauffé soumis au traitement par décharge ;
une section d'exposition à un rayonnement actinique configurée pour exposer la gouttelette ayant atterri sur la surface la plus éloignée à un rayonnement actinique ;
une section de transport configurée pour transporter le support d'enregistrement ;
et
une section de commande configurée pour commander une vitesse de transport du support d'enregistrement par la section de transport de manière à ce que la section d'éjection d'encre éjecte la gouttelette de l'encre pour jet d'encre dans les 60 secondes après le traitement par décharge effectué par la section de traitement par décharge.

FIG. 1

EP 3 524 439 B1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080204538
- JP 2014159114 A
- JP 2015143003 A
- JP 2015180529 A
- JP 2013226745 A
- JP 2013215923 A
- JP 2010162894 A
- WO 2016129452 A1
- WO 2016013644 A1
- US 2013052332 A1